# EUROPÄISCHE PATENTANMELDUNG

(11) **EP 1 880 976 A2**
(43) Veröffentlichungstag der Anmeldung: **23.01.2008**
(21) Anmeldenummer: 07013644.5
(22) Anmeldetag: 12.07.2007
(51) Int. Cl.: B68C 1/00, B62B 3/10

(54) **Sattelwagen**

(30) Priorität: 18.07.2006 DE 202006011069 U
(71) Anmelder: Kehrbach, Hartmut, 22952 Lütjensee (DE)
(72) Erfinder: Kehrbach, Hartmut, 22952 Lütjensee (DE)
(74) Vertreter: Richter, Werdermann, Gerbaulet & Hofmann

(57) **Zusammenfassung**

Die Erfindung betrifft einen Sattelwagen (100) mit einem Sattelhalter (10). Um einen Sattelwagen (100) mit einem Sattelhalter (10) zur Verfügung zu stellen, bei dem die Form des Sattelhalters (10) eine gleichmäßige Aufnahme des Sattelgewichtes gewährleistet, schlägt die Erfindung vor, dass der Sattelhalter (10) für die Aufnahme eines Sattelbaumes bzw. Sattels eine nach unten weisende Wölbung (11) aufweist.

## Beschreibung

Die Erfindung betrifft einen Sattelwagen mit einem Sattelhalter.

Sattelwagen, die auch als Sattelcaddy bezeichnet werden, der eingangs genannten Art sind dem Fachmann bekannt und geläufig.

Im Reitbetrieb haben sich Sattelwagen als hilfreiche Instrumentarien für die Aufnahme von Pferdezubehör erwiesen. Dabei stellen Sattelwagen ein nützliches Transportmittel für das Pferdezubehör dar. Zudem bieten Sattelwagen Raum für eine Daueraufbewahrung von Reitzubehör.

Aus der Druckschrift DE 20 2004 020 296 U1 ist ein fahrbarer, zusammenklappbarer Sattelwagen zum Transport von Reitsätteln, Reit- und Pflegezubehör für Pferde bekannt. Dieser vorbekannte Sattelwagen soll durch seinen stabilen Rohrrahmen in Verbindung mit einem großen Zubehörkorb, ein robustes, vielseitiges und komfortables Arbeitsgerät darstellen. Im Rahmen der Ausstattung dieses Sattelwagens ist auch ein Sattelhalter vorgesehen, der der Aufnahme eines Sattelbaums bzw. Sattels dient. Der Sattelhalter kann dabei als Einzelsattelhalter oder als Doppelsattelhalter ausgebildet sein. Der Sattelhalter weist einen Sattelhalterbügel auf, der vornehmlich die Funktion hat, ein Verrutschen des Sattels zu verhindern. Zudem befinden sich am vorderen Teil des Sattelhalters zwei Verbindungsbögen, die bis zum Sattelhalterbügel derart eingeschweißt sind, dass der Sattelhalter ein nach unten offenes Dreieck bildet, wobei der Sattelhalterbügel bogenförmig ausgebildet ist.

Es ist jedoch zu konstatieren, dass eine bogenförmige Ausgestaltung des Sattelhalterbügel der anatomischen Rückenform des Reittieres und somit der Form eines Sattelbaum bzw. eines Sattels nicht entspricht. Die anatomische Form des Pferderückens zeichnet sich insbesondere dadurch aus, dass der Bereich, in welchem der Sattel aufliegt, gewölbt ist. Um sich der Anatomie des Pferderückens anzupassen, weisen Sattel daher häufig die Form einer Wölbung auf. Bei dem aus dem Stand der Technik bekannten bogenförmigen Sattelhalter wird das Gewicht des Sattels daher durch die Pauschen des Sattels aufgenommen. Dies kann zu einer ungleichmä-ßigen Gewichtsaufnahme führen, mit der Folge, dass punktuelle Belastungen und somit Druck- und Scheuerstellen im Leder auftreten und verbleiben.

Es ist deshalb Aufgabe der Erfindung, einen Sattelwagen mit einem Sattelhalter zur Verfügung zu stellen, bei dem die Form des Sattelhalters eine gleichmäßige Aufnahme des Sattelgewichtes gewährleistet.

Diese Aufgabe wird durch die Merkmale des Anspruches 1 gelöst.

Die grundlegende Idee der Erfindung ist es, dass nicht die Pauschen des Sattels das Gewicht aufnehmen, sondern ein Sattelhalterprofil, dass in seiner Form der Form eines gängigen Sattelbaums bzw. Sattels angepasst ist.

Der Vorteil der Erfindung ist darin zu erblicken, dass die erfindungsgemäße Formgebung des Sattelhalters für eine gleichmäßige Gewichtsaufnahme sorgt.

Dies bedeutet, dass keine punktuellen Belastungen und somit keine Druck- und Scheuerstellen im Leder auftreten und somit auch ein rutschfester Sitz des Sattels auf dem Sattelwagen gegeben ist.

Eine vorteilhafte Ausgestaltung der Erfindung sieht vor, dass der Sattelhalter an einem vorderen Ende des Sattelwagens einen bogenförmigen Teil und unterhalb der Wölbung einen schräg verlaufenden Teil aufweist. Diese konstruktive Maßnahme sorgt für eine erhöhte Stabilisierung des Sattelhalters.

Es ist von Vorteil, dass unterhalb der Wölbung eine U-förmige Stange verläuft, die mit dem schräg verlaufenden Teil des Sattelhalters verbunden ist. Auf diese Weise ist gewährleistet, dass eine Sattelkippsicherung in Höhe der Pauschen gegeben ist.

Zudem sieht die Erfindung vor, dass am rückwärtigen Teil des Sattelwagens in einem Abstand zueinander zwei Holme nach oben ragen, die in einer Griffhöhe mit jeweils einem Griff versehen sind. Dadurch, dass an den Holmen in Griffhöhe Griffe angeordnet sind, wird für den Benutzer ein handhabbarer Sattelwagen geschaffen.

Vorzugsweise ist an den Holmen eine Halterung für eine Peitsche und/oder Gerte befestigt. Dies trägt der Tat zur Rechnung, dass Peitsche und Gerte essenzielles Reitzubehör darstellen und Aufnahme in einen Sattelwagen finden müssen.

Eine weitere konstruktive Maßnahme sieht zwecks Stabilisierung vor, dass die Holme mit der U-förmigen Stange verbunden sind.

Eine Bodenplatte des Sattelwagens, die von einem Grundrahmen umgeben ist, bietet weiteren Platz für Reitzubehör. Insbesondere stellt die Bodenplatte eine Stellfläche für einen Putzkasten dar oder aber auch für Fächer für Reithelme oder sonstiges Reitzubehör.

Im Rahmen der Erfindung sind auch zwischen dem den Holmen zugewandten Teil des Grundrahmens und beiden Enden der U-förmigen Stange Versteifungsstreben vorgesehen. Zwischen den Versteifungsstreben kann zudem noch eine Querstrebe angeordnet sein.

Vorzugsweise sind zwischen den Holmen und den Halterungen für die Peitsche und/oder Gerte Abstandshalter angebracht.

Eine weitere vorteilhafte Ausgestaltung der Erfindung sieht vor, dass ein Ende des die Wölbung aufweisenden Teils des Sattelhalters mit einem Rohr verbunden ist, welches mittig und versetzt von den Holmen zwischen den Holmen angeordnet ist, wobei das Rohr über scherenartig verlaufende Versteifungsstreben mit dem U-Rohr verbunden sind. In das Rohr kann dabei ein stangenförmiges Teil eines höhenverstellbaren Trensenhalters eingeführt sein. Somit dient das Rohr auch der Aufnahme eines höhenverstellbaren Trensenhalters.

Für die Halterung der Trense ist vorgesehen, dass das stangenförmige Teil an einem Ende mit zwei rund gebogenen Halbringen versehen ist.

Es ist von Vorteil, dass zwischen dem bogenförmigen Teil des Sattelhalters und der Verbindung zwischen U-förmiger Stange und schräg verlaufenden Teil des Sattelhalters ein dreiseitiges nach vorne gerichtetes Metallstück angeordnet ist, wobei zwei Seiten des Metallstücks mit dem schräg verlaufenden Teil verbunden sind und die dritte Seite des Metallstücks mit den zwei Seiten bogenförmig ineinander verlaufen. Dieses Metallstück kann die Funktion eines zusätzlichen Griffs zum Schieben des Sattelwagens oder eines Halters, beispielsweise für Halfter und Stricke, erfüllen.

Eine praktikable Variante der Erfindung sieht vor, dass zwischen den Holmen mittig und versetzt von den Holmen ein Rohr angeordnet ist, wobei ein unteres Ende des Rohrs mit einem Vierkantprofil verbunden ist, welches in Höhe der Bodenfläche und von dieser versetzt angeordnet ist.

Für die Aufnahme und Halterung von Satteldecken sieht die Erfindung zudem vor, dass an dem von dem Vierkantprofil abgewandten Ende das Rohr mit einem hakenförmig ausgebildeten Satteldeckenhalter versehen ist. Der Satteldeckenhalter ist dabei in einer Aufnahme des Rohrs in zwei Stellungen, die bei Transport gegen Verrutschen schützen, in halbkreisartigen Vertiefungen arretiert.

Zudem kann der Sattelwagen mit zwei Vorder- und Hinterrädern ausgestattet sein.

Für eine zusätzliche nötige Haftung des Reitzubehörs auf der Grundfläche kann die Grundplatte als Aluriffelplatte ausgebildet sein. Auch ist vorgesehen, dass auf den Grundrahmen ein Reling angeordnet ist. Schließlich sieht die Erfindung auch vor, dass die Griffe mit einem Gummi überzogen sind.

Im Folgenden wird die Erfindung anhand der Figuren näher erläutert. Es zeigen in schematischen Darstellungen:
- Fig. 1: einen Sattelwagen gem. der Erfindung;
- Fig. 2: einen erfindungsgemäßen Sattelwagen mit einem zweiten Sattelhalter.

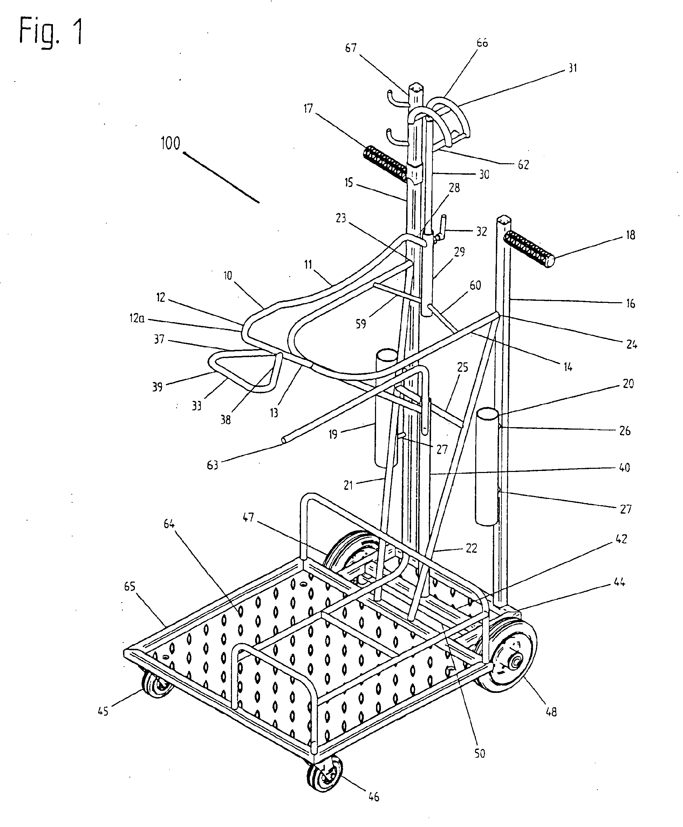

In Fig. 1 ist ein Sattelwagen gem. der Erfindung dargestellt, der mit dem Bezugszeichen 100 versehen ist.

Der Sattelwagen 100 ist für die Aufnahme eines Sattelbaums bzw. Sattels mit einem Sattelhalter 10 versehen, der eine nach unten weisende Wölbung 11 aufweist. An einem vorderen Ende 12a des Sattelwagens 100 weist der Sattelhalter 10 einen bogenförmigen Teil 12 und unterhalb der Wölbung 11 einen schräg verlaufenden Teil 13 auf. Diese konstruktive Maßnahme sorgt für eine erhöhte Stabilisierung des Sattelhalters 10. Zudem verläuft unterhalb der Wölbung 11 eine U-förmige Stange 14, die mit dem schräg verlaufenden Teil 13 des Sattelhalters 10 verbunden ist. Um für den Benutzer einen handhabbaren Sattelwagen 100 zu schaffen, ragen am rückwärtigen Teil des Sattelwagens 100 in einem Abstand zueinander zwei Holme 15, 16 nach oben, die in Griffhöhe mit jeweils einem Griff 17, 18 versehen sind. Ferner befinden sich an den Holmen 15, 16 jeweils eine Halterung 19, 20 für eine Peitsche oder Gerte. Die Holme 15, 16 sind dabei in ihrem oberen Drittel mit der U-förmigen Stange 14 verbunden. Darüber hinaus zeichnet sich der Sattelwagen 100 dadurch aus, dass er mit einer Bodenplatte 64 versehen ist, die von einem Grundrahmen 65 umgeben ist. Die Bodenplatte 64 kann dabei als Aluriffelplatte ausgebildet sein. In einem Zubehörkorb auf der Bodenplatte 64 können verschiedene Zubehörteile wie Reit- und Transportgamaschen, Stricke oder Pferdepflegemittel untergebracht sein.

Zwischen dem den Holmen 15, 16 zugewandten Teil des Grundrahmens 22 und beiden Enden 23, 24 der U-förmigen Stange 14 sind schräg verlaufende Versteifungsstreben 21, 22 angeordnet, zwischen denen sich zudem eine Querstrebe 25 befindet. Die Halterungen 19, 20 stehen mit den Holmen 15, 16 nicht in direktem Kontakt. Vielmehr sind Abstandshalter 26, 27 vorgesehen, die zwischen den Holmen 15, 16 und den Halterungen 19, 20 angebracht sind.

Ein Ende 28 des die Wölbung 11 aufweisenden Teils des Sattelhalters 10 ist mit einem Rohr 29 verbunden, welches mittig und von den Holmen 15, 16 versetzt zwischen den Holmen 15, 16 angeordnet ist. Das Rohr 29 befindet sich dabei in Höhe des oberen Drittels der Holme 15, 16. Das Rohr 29 ist über scherenartig verlaufende Versteifungsstreben 59, 60 mit der U-förmigen Stange 14 verbunden. In das Rohr 29 ist ein stangenförmiges Teil 30 eines höhenverstellbaren Trensenhalters 31 eingeführt. Mittels eines Arretiermechanismus 32 kann das stangenförmige Teil in dem Rohr 29 beispielsweise mit einer Feststellschraube des Arretiermechanismus 32 arretiert werden.

Zwischen dem bogenförmigen Teil 12 des Sattelhalters 10 und der Verbindung zwischen der U-förmigen Stange 14 und schräg verlaufendem Teil 13 des Sattelhalters 10 ist ein dreiseitiges nach vorne gerichtetes Metallstück 36 angeordnet. Das Metallstück 36 kann mit dem schräg verlaufenden Teil 13 des Sattelhalters 10 verschweißt sein. Zwei Seiten 37, 38 des Metallstücks 36 sind mit dem schräg verlaufendem Teil 13 beispielsweise in Form einer Schweißverbindung verbunden, wohingegen die dritte Seite 39 des Metallstücks 36 mit den zwei Seiten 37, 38 bogenförmig und einstückig ineinander verlaufen. Zwischen den Holmen 15, 16 ist mittig und versetzt von den Holmen 15,16 ein Rohr 40 angeordnet. Das untere Ende 41 des Rohrs 40 ist mit dem Vierkantprofil 42 beispielsweise in Gestalt einer Schweißverbindung verbunden, wobei das Vierkantprofil 42 in Höhe der Bodenplatte 59 und von dieser versetzt angeordnet ist. Das Vierkantprofil 42 ist wiederum Bestandteil eines Profilrahmens 44, der zudem eine Radachse 50 für die zwei Hinterräder 47, 48 aufweist. Im vorderen Teil des Sattelwagens 100 befinden sich unterhalb der Bodenplatte 64 zwei Vorderräder 45, 46. An dem von dem Vierkantprofil 42 abgewandten Ende 43 des Rohres 40 befindet sich ein hakenförmig ausgebildeter Satteldeckenhalter 63, der als Metallstange ausgebildet sein kann und in das Rohr 40 hineinragt und mit diesem befestigt ist. Zudem ist an dem stangenförmigen Teil 30 ein bogenförmiger Haken 62 angebracht.

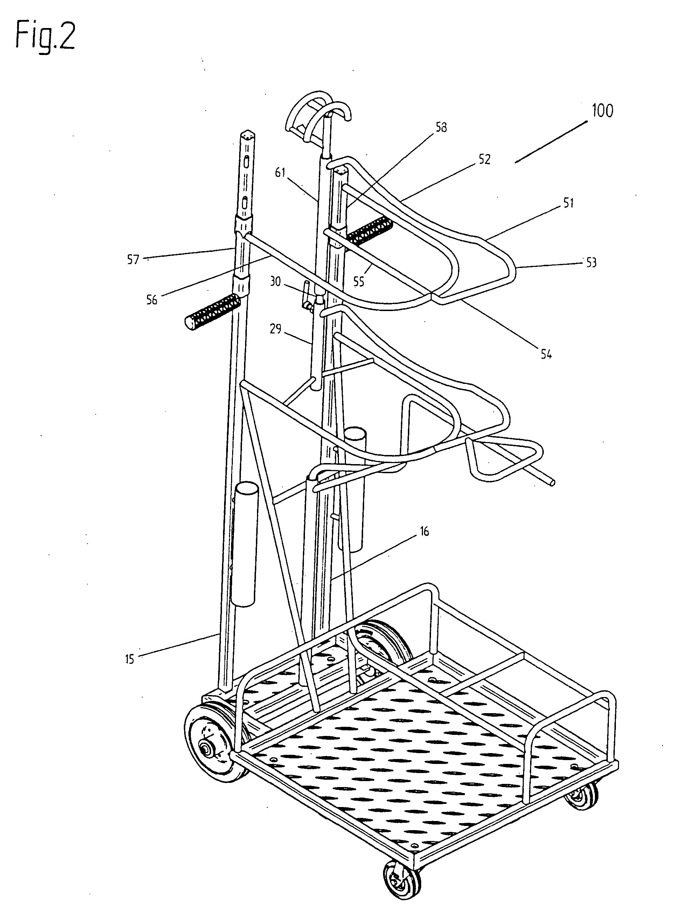

Aus Fig. 2 geht hervor, dass der erfindungsgemäße Sattelwagen 100 auch über einen über den Sattelhalter 10 befindlichen zweiten Sattelhalter 51 verfügen kann. Auch der zweite Sattelhalter 51 ist mit einer für die Aufnahme eines Sattelbaums bzw. Sattels nach unten weisende Wölbung 52 versehen. Auch der zweite Sattelhalter 51 weist an einem vorderen Ende des Sattelwagens 100 einen bogenförmigen Teil 53 und unterhalb der Wölbung 52 zunächst einen schräg verlaufenden Teil 54 auf, der dann unterhalb der Wölbung 52 geradlinig verläuft. Sowohl der Teil des Sattelhalters 100, der die nach unten weisende Wölbung 52 aufweist, als auch der unterhalb der Wölbung geradlinig verlaufende Teil 55 des Sattelhalters 51 sind an den Enden mit einem Rohr 61 verschweißt, welches das stangenförmige Teil 30 des höhenverstellbaren Trensenhalters 31 verbindend umgibt. Unterhalb der Wölbung 52 des zweiten Sattelhalters 51 verläuft eine U-förmige Stange 56, die mit dem geradlinig verlaufenden Teil 55 des zweiten Sattelhalters 51 und mit Anschlussstücken 57, 58 der Holme 15, 16 verbunden ist. Diese Anschlussstücke 57, 58 können auch lösbar an den Holmen 15, 16 angebracht werden. Auf diese Weise ist gewährleistet, dass der zweite Sattelhalter 51 an den Sattelwagen 10 lösbar angeordnet ist, da auch das stangenförmige Teil 30 aus dem Rohr 29 entfernbar ist.

### Bezugszeichenliste

- 100: Sattelwagen
- 10: Sattelhalter
- 11: nach unten weisende Wölbung
- 12a: vorderes Ende
- 12: bogenförmiges Teil
- 13: schräg verlaufendes Teil
- 14: U-förmige Stange
- 15, 16: Holme
- 17, 18: Griff
- 19,20: Halterung
- 23, 24: Enden
- 21, 22: schräg verlaufende Versteifungsstreben
- 25: Querstrebe
- 26, 27: Abstandshalter
- 28: ein Ende
- 29: Rohr
- 30: stangenförmiges Teil
- 31: Trensenhalter
- 32: Arretiermechanismus
- 33: Metallstück
- 37, 38: zwei Seiten
- 39: dritte Seite
- 40: Rohr
- 42: Vierkantprofil
- 43: abgewandtes Ende
- 44: Profilrahmen
- 50: Radachse
- 45, 46: zwei Vorderräder
- 47, 48: zwei Hinterräder
- 51: zweiter Sattelhalter
- 52: nach unten weisende Wölbung
- 53: bogenförmiges Teil
- 54: schräg verlaufender Teil
- 55: geradlinig verlaufender Teil
- 56: U-förmige Stange
- 57, 58: Anschlussstücken
- 59, 60: Versteifungsstreben
- 61: Rohr
- 62: bogenförmiger Haken
- 63: Satteldeckenhalter
- 64: Bodenplatte
- 65: Grundrahmen
- 66: gebogene Halbringe
- 67: gebogene Halbringe

## Patentansprüche

1. Sattelwagen (100) mit einem Sattelhalter (10), **dadurch gekennzeichnet, dass** der Sattelhalter (10) für die Aufnahme eines Sattelbaums bzw. Sattels eine nach unten weisende Wölbung (11) aufweist.

2. Sattelwagen nach Anspruch 1, **dadurch gekennzeichnet, dass** der Sattelhalter (10) an einem vorderen Ende (13) des Sattelwagens (100) einen bogenförmigen Teil (12) und unterhalb der Wölbung (11) einen schräg verlaufenden Teil (13) aufweist.

3. Sattelwagen nach Anspruch 1 oder 2, **dadurch gekennzeichnet, dass** unterhalb der Wölbung (11) eine U-förmige Stange (14) verläuft, die mit dem schräg verlaufenden Teil (13) des Sattelhalters (100) verbunden ist.

4. Sattelwagen nach einem der Ansprüche 1 bis 3, **dadurch gekennzeichnet, dass** am rückwärtigen Teil des Sattelwagens (100) in einem Abstand zueinander zwei Holme (15, 16) nach oben ragen, die in einer Griffhöhe mit jeweils einem Griff (17, 18) versehen sind.

5. Sattelwagen nach Anspruch 4, **dadurch gekennzeichnet, dass** an den Holmen (15, 16) eine Halterung (19, 20) für eine Peitsche und/oder Gerte befestigt ist.

6. Sattelwagen nach Anspruch 4 oder 5, **dadurch gekennzeichnet, dass** die Holme (15, 16) mit der U-förmigen Stange (14) verbunden sind.

7. Sattelwagen nach einem der Ansprüche 1 bis 6, **dadurch gekennzeichnet, dass** der Sattelwagen (100) mit einer Bodenplatte (64) versehen ist, die von einem Grundrahmen (65) umgeben ist.

8. Sattelwagen nach Anspruch 7, **dadurch gekennzeichnet, dass** zwischen dem den Holmen (15, 16) zugewandten Teil des Grundrahmens (22) und beiden Enden (23, 24) der U-förmigen Stange (14) schräg verlaufende Versteifungstreben (59, 60) angeordnet sind.

9. Sattelwagen nach Anspruch 8, **dadurch gekennzeichnet, dass** zwischen den Versteifungsstreben (21, 22) eine Querstrebe (25) angeordnet ist.

10. Sattelwagen nach einem der Ansprüche 4 bis 9, **dadurch gekennzeichnet, dass** zwischen den Holmen (15, 16) und den Halterungen (19, 20) Abstandshalter (26, 27) angebracht sind.

11. Sattelwagen (100) nach einem der Ansprüche 4 bis 10, **dadurch gekennzeichnet, dass** ein Ende (28) des die Wölbung (11) aufweisenden Teils des Sattelhalters (10) mit einem Rohr (29) verbunden ist, welches mittig und vor den Holmen (15, 16) versetzt zwischen den Holmen (15, 16) angeordnet ist, wobei das Rohr (29) über scherenartig verlaufene Versteifungsstreben (59, 60) mit der U-förmigen Stange (14) verbunden ist.

12. Sattelwagen nach Anspruch 11, **dadurch gekennzeichnet, dass** in das Rohr (29) ein stangenförmiges Teil (30) eines höhenverstellbaren Trensenhalters (31) eingeführt ist.

13. Sattelwagen nach Anspruch 12, **dadurch gekennzeichnet, dass** an einem Ende des stangenförmigen Teils (30) zwei rund gebogene Halbringe (66, 67) angeordnet sind.

14. Sattelwagen nach einem der Ansprüche 3 bis 13, **dadurch gekennzeichnet, dass** zwischen dem bogenförmigen Teil (12) des Sattelhalters und der Verbindung zwischen der U-förmigen Stange (14) und schräg verlaufendem Teil (13) des Sattelhalters (10) ein dreiseitiges, nach vorne gerichtetes Metallstück (36) angeordnet ist, wobei zwei Seiten (37, 38) mit dem schräg verlaufenden Teil (13) verbunden sind und eine dritte Seite (39) mit den zwei Seiten (37, 38) bogenförmig und einstückig ineinander verlaufen.

15. Sattelwagen nach einem der Ansprüche 4 bis 14, **dadurch gekennzeichnet, dass** zwischen den Holmen (15, 16) mittig und versetzt vor den Holmen (15, 16) ein Rohr (40) angeordnet ist, wobei ein unteres Ende (41) des Rohrs (40) mit einem Vierkantprofil (42) verbunden ist, welches in Höhe der Bodenplatte (64) und von dieser versetzt angeordnet ist.

16. Sattelwagen nach Anspruch 15, **dadurch gekennzeichnet, dass** an dem von dem Vierkantprofil (42) abgewandeten Ende (43) des Rohres (40) ein hakenförmig ausgebildeter Satteldeckenhalter (63) versehen ist.

17. Sattelwagen nach einem der vorhergehenden Ansprüche, **dadurch gekennzeichnet, dass** der Sattelwagen (100) mit zwei Vorderrädern (45, 46) ausgestattet ist.

18. Sattelwagen nach einem der vorhergehenden Ansprüche, **dadurch gekennzeichnet, dass** der Sattelwagen (100) mit zwei Hinterrädern (47, 48) ausgestattet ist.

19. Sattelwagen nach einem der Ansprüche 7 bis 18, **dadurch gekennzeichnet, dass** die Bodenplatte (64) eine Aluriffelplatte ist.

20. Sattelwagen nach einem der Ansprüche 4 bis 19, **dadurch gekennzeichnet, dass** die Griffe (17, 18) mit einem Gummibezug überzogen sind.

21. Sattelwagen nach einem der Ansprüche 7 bis 20, **dadurch gekennzeichnet, dass** auf dem Grundrahmen (65) ein Reling (49) angeordnet ist.

22. Sattelwagen nach einem der vorhergehenden Ansprüche, **dadurch gekennzeichnet, dass** der Sattelwagen (100) mit einem zweiten Sattelhalter (52) versehen ist, der an dem Sattelwagen lösbar anbringbar ist.
